# EUROPEAN PATENT APPLICATION

(11) **EP 0 637 868 A2**
(43) Date of publication of application: **08.02.1995**
(21) Application number: 94112013.1
(22) Date of filing: 02.08.1994
(51) Int. Cl.: H02M 3/156, H02J 7/14

(54) **A voltage regulator device, for example for motor cycles**

(30) Priority: 04.08.1993 IT TO930580
(71) Applicant: FACIND S.r.l., I-56010 Coltano (Pisa) (IT)
(72) Inventor: Franchi, Emilio, I-56100 Pisa (IT)
(74) Representative: Bosotti, Luciano

(57) **Abstract**

A regulator device devised in particular for motor cycles, intended to be interposed between a generator (V) which produces an alternating input signal the amplitude and frequency of which are widely variable, and a load (B) which must be supplied with a substantially constant DC voltage signal. The device comprises at least one electronic switch such as a power FET (5) interposed between the input terminals (2) and the output terminal (3) of the circuit in such a way as to be electrically connected in series with the source (V).

## Description

The present invention relates to voltages regulator devices and, in particular, to a voltage regulator device according to the preamble of Claim 1.

Devices of the above specified type are used in the art above all in the motor vehicle field in association with generators mounted on board a vehicle.

The present invention has been developed with a particular view to its possible use on board motor vehicles, that is to say in a situation in which the regulator is usually associated with a generator driven by the internal combustion engine of the vehicle in which circumstances the variations in the voltage and frequency of the input signal are particularly significant due to the wide range of possible variation in the speed of rotation of the engine. In the motor vehicle environment it is entirely normal for the signal at the input of the voltage regulator to vary from a few volts to three hundred volts with a frequency variable from practically DC to 1000 Hz. In this specific application other factors are sometimes particularly critical, for example the low power of the internal combustion engine (above all in the case of mopeds) with the consequent need to prevent the electric generator from absorbing an excessive amount of mechanical power from the engine, which power is not converted into useful electrical energy.

In this regard, voltage regulator devices of the above specified type are known in the art, in which an electronic switch is interposed between the input and the output of the regulator, which switch is electrically connected in parallel with respect to the electrical power source (the generator). As a result, during the regulation operation, when the switch is closed, the generator is in fact short circuited. Apart from other considerations, this arrangement is of little advantage in terms of the overall energy yield. When the generator is short circuited it does not produce useful electrical power, but nevertheless constitutes a load on the internal combustion engine from which it takes mechanical power without converting this into useful electrical power for the utiliser devices on board the motor vehicle. The electrical power generated in these conditions must, however, be dissipated in the form of heat energy, which contributes to overheating of the regulator device and the components associated with it, with the consequent necessity of providing cooling members etc. This, it will be remembered, is in a situation in which, above all, size and weight are particularly critical factors.

The object of the present invention is to provide a regulator device of the above specified type in which the said disadvantages are avoided.

According to the present invention this object is achieved by a voltage regulator device having the characteristics set out in a specific manner in the claims which follow.

An aspect of particular importance in the arrangement according to the invention is the fact that the said switch is connected between the input and the output of the regulator in such a way as to be electrically connected in series with respect to the electrical power source (generator). Consequently (referring to the application in the motor vehicle field to which reference is made hereinabove) when the switch is closed the generator is connected to the load and the mechanical power absorbed from the internal combustion engine of the vehicle is transferred to the output as useful electrical power. When the switch element is open useful electrical power is not generated but, at the same time, the generator is connected in open circuit so that it does not, in practice, absorb appreciable mechanical power from the internal combustion engine of the vehicle.

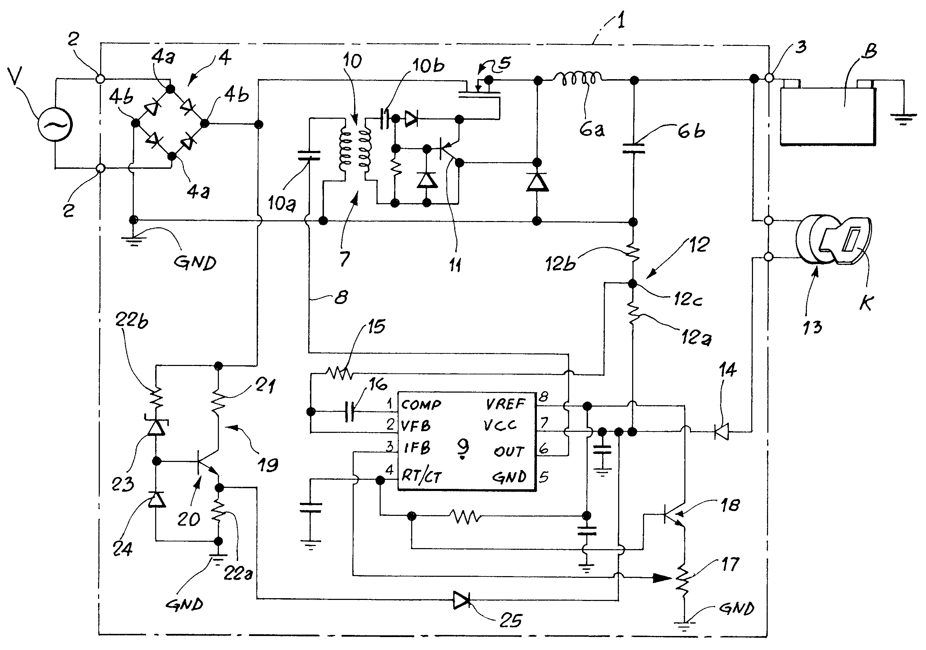

The invention will now be described purely by way of non-limitative example, with reference to the attached drawing, which illustrates, in the form of a circuit diagram, the structure of a possible embodiment of a regulator device according to the invention.

The device according to the invention, generally indicated 1, is intended in use to be interposed between:
- an electrical source V which generates an alternating input signal with a variable amplitude and frequency,
- a load B to which a substantially continuous regulated voltage signal must be applied.

In a typical practical configuration the regulator device 1 is constituted by a unitary circuit such as a hybrid and/or integrated circuit mounted on an associated dissipator (not illustrated in the drawings) comprising at least one input terminal 2 for connection to the source V, as well as at least one output terminal 3 for connection to the load B.

In the exemplary embodiment illustrated here (in a non-limitative manner) the circuit 1 has two input terminals 2; in fact, a connection to the generator V of the generally floating type, symmetrical with respect to ground is envisaged. The generator V can, for example, be any type of generator mounted on a motor vehicle and, in the case of a possible application to a motor vehicle, may be a so called flywheel generator of the type described, for example, in United States patents US-A-3821570 and US-A-3955550.

As already mentioned in the introductory part of the present specification, the source V applies, between the two input terminals 2, an approximately sinusoidal alternating signal the amplitude and frequency of which can vary over a rather wide range: for example the voltage may vary from 15 to 220 volts and the frequency from about 0 to 1 KHz.

On the other hand, at the output terminal 3 (and therefore at the load B, schematically indicated here in the form of a battery) it is desired to provide a substantially continuous signal, for example with a regulated value equal to about 14.2 volts.

In passing from the input terminals 2 to the output terminal 3 (the voltage signal present on this terminal must in general be referred to the common ground GND of the device 1 and the load B) the signal from the source V traverses:
- a diode rectifier bridge 4 (a Graetz bridge),
- an electronic switch 5 constituted for example by a power FET, and
- a low pass LC filtering network comprising an inductor 6a and a capacitor 6b.

The bridge 4 has two input terminals 4a to which the signal from the source V is applied , and two output terminals 4b one of which is connected to ground GND and the other of which is connected to the drain of the FET 5 the source of which is connected to one of the terminals of the inductor 6a. The other terminal of the inductor 6a is connected to the output terminal 3, whilst the capacitor 6b is interposed between the output terminal 3 and the ground GND.

It will be appreciated that, according to an important characteristic of the arrangement according to the invention, the FET 5, acting as a solid state electronic switch, is interposed between the input and the output of the device 1 in such a way as to be electrically connected in series with the source V.

Consequently, when the switch 5 is open (FET in the cut off or interdiction condition) there is practically no absorption of current (and therefore power absorption) on the part of the generator V which operates in open circuit. There is only any absorption of power when the switch 5 is closed (FET in conduction or saturation condition) so that the signal from the source V is passed to the load B through the LC network 6a, 6b.

The reference numeral 7 generally indicates a control circuit for the gate of the FET 5 the function of which is selectively to control the opening and closure of the electronic switch constituted by the FET 5. Thus, as illustrated in more detail hereinbelow, opening and closing of the switch 5 is controlled at a substantially fixed frequency (chosen for example in a range between 50 KHz and 1 MHz - the higher values being preferred for reasons of functional efficiency of the circuit ) but with variable duty cycle values.

The control of the duty cycle is achieved as a function of the signal present on an input line 8 of the circuit 7. The input line 8 leads to a circuit (for example an integrated circuit) operating according to criteria which will be described in more detail herein below.

As far as the operation of the control circuit 7 is concerned, it is sufficient to record that the line 8 carries a signal constituted by a train of rectangular pulses the duty cycle of which is selectively varied by the circuit 9. The control signal present on the line 8 can therefore be seen as a pulse-width-modulated or PWM signal.

Preferably, the PWM signal present on the line 8 is supplied to an isolator element 10. The isolator element is represented here in the form of a transformer having, associated with the primary winding and the secondary winding, respective capacitors 10a, 10b for cutting out the DC component. It is, naturally, possible to consider the use of isolators of different types, for example an opto-isolator.

Whatever the specific circuit arrangement adopted, the output signal from the isolator 10 is used to control the switching function (on-off) of a transistor 11 which controls the gate of the FET 5. The circuit details adopted for controlling the transistor 11 starting from the output of the isolator (in the present case this is the secondary winding of the transformer 10) are widely known to the technical expert in the field and do not require to be described in detail here. The attached drawing schematically illustrates an arrangement in which the transistor 11 is a bipolar PNP transistor which controls the gate of the FET 5 via its emitter. Naturally it is possible to utilise a transistor of different type with a different control configuration.

The function of the integrated circuit 9 is essentially that of selectively varying the duty cycle of the signal present on the line 8 (and therefore the opening/closing duty cycle of the FET 5), in such a way as to maintain the DC voltage signal present on the output terminal 3 constant at the predetermined level.

In the arrangement according to the example illustrated here this result is obtained thanks to a feedback arrangement in which the signal present on the output terminal 3 is fed back to the input of the integrated circuit 9 in such a way that, in general terms, when the level of the output signal tends to increase, the duty cycle of opening and closing the FET is varied in such a way as to reduce the relative time of the closure interval thereby reducing in a corresponding manner the transfer of electrical power from the input to the output of the circuit. In a complementary way, when the signal present on the output terminal 3 tends to fall, the duty cycle of opening and closing the FET 5 is varied in such a way as to increase the relative duration of the closure interval, thus to increase the transfer of electrical power from the input to the output.

The level of the signal present on the output terminal 3 is detected by a resistive voltage divider 12. The divider 12 comprises two resistors 12a, 12b and, in operation of the device, this is interposed between the output terminal 3 and the ground GND. Preferably the voltage divider 12 is not connected to the terminal 3 (battery voltage) in a direct and continuous manner (which would cause a dissipation of heat even when the device 1 is inactive), but via a switch 13 which is closed when the vehicle ignition key K is moved to the closure position. Usually, the transfer of output voltage to the divider 12 takes place not only through the switch 13 but also through a diode 14 the anode of which faces the terminal 3 so as to act as a protection against possible battery voltage reversals.

For the purpose of understanding the operation of the invention the divider 12 can be considered in effect to be interposed between the output terminal 3 and ground GND of the circuit. The intermediate take off point 12c of the divider 12 is connected to the input of the integrated circuit 9. In particular, making reference (purely by way of non-limitative example) to the integrated circuit UC3843, the output level signal detected on the take-off point 12c is lead, via a resistor 15 both directly to the pin 2 (VFB) and through a capacitor 16 to the pin 1 (COMP) of the integrated circuit 9. As can easily be understood from a consultation of the data sheet of the integrated circuit in question, this connection achieves a threshold comparator which generates, on the pin 6 (OUT) of the integrated circuit 9, a pulse-width-modulated signal PWM capable of being utilised for transmission on the line 8 to the control circuit 7.

In the preferred embodiment illustrated in the attached drawing the use is also envisaged of the pin 3 (IFB) for the realisation of a current feedback arrangement intended to optimise the efficiency of the circuit as far as the current control is concerned. In particular, to pin 3 is applied the signal taken from an adjustable potentiometer 17 interposed between ground GND and the emitter of an NPN transistor 18 the collector of which is connected to pin 8 (VREF) of the integrated circuit 9 and the base of which is controlled by the signal detected (after scaling and filtering) on pin 4 (RT/CT) of the same integrated circuit 9.

Finally, reference 19 indicates an assembly of circuit elements intended to permit the device 1 to start operating even in conditions in which, at the beginning of the operation, there is no DC signal present on the output terminal 3 (output voltage substantially equal to zero): this case, which occurs rather frequently in motor vehicle applications and above all in mopeds, in which the load B, instead of being constituted by a battery across the terminals of which there is a certain level of voltage, is a totally passive utiliser (for example lights, ignition device etc).

The unit 19 is interposed between ground GND of the circuit and the 'hot' output terminal of the bridge 4, that is to say the terminal 4b connected to the switch 5.

More specifically, the circuit assembly 19 includes a transistor 20 (of NPN type in the illustrated example) the collector of which is connected via a resistor 21 to the output of the bridge 4 and the emitter of which is grounded through a resistor 22a.

Between the output terminal 4b of the bridge 4 and the base of the transistor 20 are interposed a further resistor 22b and a zener diode (the anode of which is connected to the base of the transistor 20). The cathode of a further diode 24 is connected to the base of the transistor 20 and its anode is connected to ground GND.

The signal present at the emitter of the transistor 20 is transferred through a diode 25 to the line which connects the signal present at the output terminal 3 (taken through the key switch 13) to pin 7 (VCC) of the integrated circuit 9.

In practice, as soon as a signal appears at the output of the bridge 4, (even a minimum signal) the zener diode 23 biases the transistor 20 in such a way that the signal present at the emitter of this latter is transferred to the input 7 of the integrated circuit 9 guaranteeing supply, with consequent commencement of the open/closing process of the FET 5 through the control circuit 7.

The supply of the integrated circuit 9 through the circuit assembly 19 (first supply line) is maintained until the voltage level taken from the output terminal 3 through the key switch 13 (second supply line) reaches a sufficient level to ensure supply of the regulator device as a whole. This result is obtained thanks to the diode 25 the anode of which is connected to the emitter of the transistor 20 and the cathode of which is connected to pin 7 of the integrated circuit 9. For example, if the desired voltage level at the output terminal 7 is of the order of 14.2 volts, the diode 23 can be chosen in such a way as to have a zener voltage of the order of 9 volts.

As soon as the voltage present at the output terminal 3, transferred through the integrated circuit 9 via the key switch 13 reaches a sufficient level to cause reverse biasing of the diode 25, the first supply line constituted by the circuit assembly 19 is disactivated and no longer intervenes in the supply of the integrated circuit 9. Naturally, the principle of the invention remaining the same, the details of construction and the embodiments can be widely varied with respect to what has been described and illustrated, without by this departing from the ambit of the present invention. In particular, it is possible to consider replacing the single electronic switch (that is to say the FET 5) illustrated in the attached drawing with an assembly of electronic switches (for example 2 FETs connected in parallel together) intended to be utilised in sequence alternately with one another for the purpose of reducing the thermal stresses on the components and the device as a whole.

## Claims

1. A voltage regulator device (1) having at least one input terminal (2) intended, in use, to be connected to an electrical source (V) which generates an alternating input signal having a variable amplitude and frequency, and at least one output terminal (3) intended, in use, to be connected to a load to be supplied with a substantially continuous output signal (DC signal), including switch means (5) interposed between the said at least one input terminal (2) and the said at least one output terminal (3), characterised in that the said switch means (5) are connected between the said at least one input terminal (2) and the said at least one output terminal (3) in such a way as to be connected, in use, electrically in series with the said electrical source (V).

2. A device according to Claim 1, characterised in that the said switch means (5) have associated control means (7) for selectively controlling the opening and closing of the switch means (5) with a selectively variable duty cycle.

3. A device according to Claim 3, characterised in that the phase of the duty cycle corresponding to closure of the said switch means (5) is related by an inverse law to the level of the said substantially continuous voltage signal such that the duration of the closure intervals of the said switch means (5) increase or, respectively, decrease, when the level of the said output signal decreases or increases respectively.

4. A device according to any of Claims from 1 to 3, characterised in that it further includes feedback means (9, 12) sensitive to the level of the said output signal and capable of applying feed back to the said switch means (5) to regulate the opening and closing of the said switch means (5) in such a way as to maintain the said output signal at a substantially constant voltage level.

5. A device according to Claim 2 and Claim 4, characterised in that the said feedback means (9, 12) selectively control the duty cycle of opening and closing of the said switch means (5).

6. A device according to Claim 2, characterised in that the said switch means (5) are controlled to open and close at a substantially constant frequency.

7. A device according to Claim 6, characterised in that the said substantially constant frequency is chosen from the range lying between 50 KHz and 1 MHz.

8. A device according to Claim 7, characterised in that the said frequency is chosen in the region of 400 KHz.

9. A device according to any preceding Claim, characterised in that the said switch means are electronic switch means (5).

10. A device according to Claim 8, characterised in that the said electronic switch means comprise at least one transistor such as a field effect transistor (5).

11. A device according to Claim 4, characterised in that the said feedback means (9, 12) has associated therewith at least one isolator element (10) for isolating the said switch means (5) from the said feedback means (9, 12) in relation to the DC signal components.

12. A device according to Claim 11, characterised in that the said isolator element (10) is chosen from the set constituted by a transformer and an opto-electronic isolator.

13. A device according to Claim 4 or Claim 11, characterised in that the said feedback means comprise a resistive divider (12) which taps off the level of the said output signal.

14. A device according to Claim 4 or Claim 13, characterised in that between the said at least one output terminal (3) and the said feedback means (9, 12) is interposed an activation switch (13) selectively switchable between at least one rest position, in which the said feedback means (9, 12) are electrically isolated from the said at least one output terminal (3), and at least one active position in which the said feedback means (9, 12) are connected to the said at least one output terminal.

15. A device according to Claim 14, characterised in that the said activation switch (13) is a key switch.

16. A device according to any preceding Claim, characterised in that the said switch means (5) are disposed downstream of a rectifier bridge (4) which receives the said alternating input signal.

17. A device according to any preceding Claim, characterised in that the said switch means (5) are disposed upstream of a stabiliser network (6a ,6b) capable of transferring the output signal from the said switch means (5) to the said at least one output terminal (3).

18. A device according to Claim 17, characterised in that the said stabiliser network is an LC network (6a, 6b).

19. A device according to any preceding Claim, characterised in that the said switch means (5) are connected, for the purpose of supply:
- to a first supply line (13, 14) connected, in use, to the said at least one output terminal (3), and
- to a second supply line (19) connected to the said at least one input terminal (2),
the arrangement being such that supply of the said switch means (5) is ensured upon start up of the device (1) even in the absence of a signal at a sufficient level on the said at least output terminal (3).

20. A device according to Claim 19, characterised in that between the said first supply line (13, 14) and the said second supply line (19) are interposed separator means (25) which, upon attainment of a determined level by the said signal present on the said at least one output terminal (13), disconnects the said switch means (5) from the said second supply line (19).

21. A device according to Claim 3, characterised in that the said separator means comprise a diode (25).

22. A device according to Claim 3, characterised in that the said feedback means comprise a pulse width modulation or PWM circuit (9) which receives at its input (15, 16) a signal indicative of the level of the said output signal (3) and which generates at its output a pulse signal in which the duty cycle of each pulse is a function of the level of the said output signal .

23. A device according to Claim 22, characterised in that the said modulator circuit (9) carries associated respective feedback control means (17, 18) for controlling the current associated with the respective output signal.

24. A device according to Claim 22 or Claim 23, characterised in that the said modulator circuit is an integrated PWM circuit.
